# EUROPÄISCHE PATENTSCHRIFT

(11) **EP 2 256 566 B1**
(45) Veröffentlichungstag und Bekanntmachung des Hinweises auf die Patenterteilung: **08.08.2012**
(21) Anmeldenummer: 09160824.0
(22) Anmeldetag: 20.05.2009
(51) Int. Cl.: G05B 19/042

(54) **Stromsparende Steuereinrichtung für ein Feldgerät**
Energy-efficient control device for a field device
Dispositif de commande à économie d'énergie pour un appareil de terrain

(43) Veröffentlichungstag der Anmeldung: 01.12.2010
(73) Patentinhaber: VEGA Grieshaber KG, 77709 Wolfach (DE)
(72) Erfinder: Isenmann, Andreas, 77716 Haslach i.K. (DE); Allgaier, Volker, 77716 Haslach i.K. (DE)
(74) Vertreter: Maiwald Patentanwalts GmbH

(56) Entgegenhaltungen:
- US-A1- 2003 233 156
- US-A1- 2006 116 102

## Beschreibung

### Gebiet der Erfindung

Die Erfindung betrifft Messsysteme in technischen Anlagen, beispielsweise zum Messen eines Füllstands, eines Grenzstands, eines Drucks oder eines Durchflusses. Insbesondere betrifft die Erfindung eine Steuereinrichtung für ein Feldgerät, ein Feldgerät mit einer Steuereinrichtung, ein Verfahren zur Steuerung eines Feldgeräts, ein Programmelement für eine Steuereinrichtung und ein computerlesbares Medium.

### Technischer Hintergrund

Feldgeräte als Komponenten eines Prozessüberwachungssystems werden in technischen Anlagen betrieben, um beispielsweise den Füllstand, den Grenzstand oder den Druck in einem Behälter oder auch um die Durchflussmenge durch eine Leitung zu messen. Dazu weisen manche der Feldgeräte Sensoren auf, mit denen die eigentlichen Messungen durchgeführt werden. Das Prozessüberwachungssystem kann weitere Feldgeräte umfassen, die beispielsweise zur Weiterleitung und Verarbeitung der erfassten Messwerte an eine zentrale Einrichtung dienen. Jedes der Feldgeräte weist eine Steuereinrichtung auf, mit der beispielsweise ein Sensor angesteuert werden kann oder mit der Messergebnisse des Sensors weiterverarbeitet bzw. weitergeleitet werden können.

Zur Energieversorgung sind die einzelnen Feldgeräte jeweils mit einer Stromquelle verbunden. Einzelne Feldgeräte können beispielsweise über eine Leitung an ein Stromnetz angeschlossen sein, aber auch, beispielsweise wenn sie sich an unzugänglichen Stellen befinden, mit einer Batterie oder einem Akkumulator gekoppelt sein.

Obwohl manche Messungen nur wenige Male pro Tag durchgeführt werden müssen, verbrauchen die zur Messung eingesetzten Feldgeräte verhältnismäßig viel Energie. Sind die Feldgeräte darüber hinaus batteriebetrieben, müssen verbrauchte Batterien regelmäßig ausgetauscht werden. Dies erfordert Wartungsaufwand.

Die US 2006/0116102 A1 offenbart ein Feldgerät mit einer Steuerung, die derart konfiguriert werden kann, dass sie mittels Hardware, Software oder beidem aktiv ihren Stromverbrauch und den Stromverbrauch von angeschlossenen Feldgeräten steuern kann. Dazu kann die Steuerung sich oder jedes gewünschte angeschlossene Feldgerät in einen Niedrigenergie-Schlafmodus versetzen.

### Zusammenfassung der Erfindung

Aufgabe der Erfindung ist es, ein wartungsarmes und kostensparendes Feldgerät bereitzustellen.

Diese Aufgabe wird durch den Gegenstand der unabhängigen Ansprüche gelöst. Weitere Ausführungsformen der Erfindung ergeben sich aus den abhängigen Ansprüchen.

Gemäß einer Ausführungsform der Erfindung umfasst eine Steuereinrichtung für ein Feldgerät, das beispielsweise zur Füllstands-, Grenzstands-, Druck-, und Durchflussmessung ausgeführt ist, eine Steuereinheit zur Steuerung des Feldgeräts und eine separate Überwachungseinheit, wobei die Steuereinheit zum wahlweisen Einnehmen eines Arbeitsmodus und eines Schlafmodus ausgeführt ist, wobei die Steuereinheit dazu ausgeführt ist, vor dem Einnehmen des Schlafmodus ein Deaktivierungssignal an die Überwachungseinheit zu senden, wobei die Überwachungseinheit dazu ausgeführt ist, die Steuereinheit nach dem Empfang eines Aktivierungssignals in den Arbeitsmodus zu bringen.

Die Steuereinrichtung für das Feldgerät weist eine von einer Steuerungseinheit zur Steuerung des Feldgeräts separate Überwachungseinheit auf, die, wenn sich die Steuereinheit in einem Schlafmodus befindet, auf ein Aktivierungssignal wartet, um die Steuereinheit wieder in den Arbeitsmodus zu bringen oder zu überführen.

Dadurch kann die Steuereinheit in Bezug auf ihre Leistungsfähigkeit im Arbeitsmodus optimiert sein und die Überwachungseinheit dahingehend optimiert sein, beim Warten auf das Aktivierungssignal möglichst wenig Energie zu verbrauchen. Auf diese Weise kann die Energieaufnahme der Steuereinrichtung reduziert werden.

Die Steuereinheit kann zur Steuerung von elektrischen und/oder elektronischen Komponenten, wie etwa eine Messeinheit und/oder eine Kommunikationseinheit des Feldgeräts dienen. Die Messeinheit dient dabei zur Steuerung eines mit dem Feldgerät verbundenen Sensors, das heißt zur Ermittlung von Messwerten. Die Kommunikationseinheit ist dazu ausgeführt, die von der Messeinheit ermittelten Messwerte an einen Empfänger zu senden. Das Senden kann über eine Leitung aber auch über Funk erfolgen. Der Empfänger kann ein weiteres Feldgerät oder eine zentrale Einrichtung eines Prozessüberwachungs- und/oder -steuerungssystems sein, dessen Bestandteil oder Komponente das Feldgerät ist.

Dadurch, dass die Steuereinrichtung eine von der Steuereinheit separate Überwachungseinheit umfasst, sind die Steuereinheit und die Überwachungseinheit als verschiedene Komponenten der Steuereinheit ausgeführt und können hinsichtlich ihrer Funktion und insbesondere hinsichtlich ihres Energieverbrauches optimiert werden. Im Arbeitsmodus, in dem die Steuereinheit aktiv ist und Berechnungen durchführt kann und/oder mit anderen Komponenten des Feldgeräts in Kommunikation stehen kann, verbraucht die Steuereinheit gegenüber dem Schlafmodus relativ viel Energie. Die zeitlichen Phasen, in dem sich die Steuereinheit im Arbeitsmodus befindet, können aber bei einer Steuereinrichtung für ein Feldgerät im Verhältnis gegenüber den Phasen, in dem sie sich in einem Schlafmodus befindet, relativ kurz sein. Beispielsweise kann sich die Steuereinheit pro Tag nur wenige Sekunden im Arbeitsmodus befinden, in denen sie beispielsweise die Messeinheit anweist, den Füllstand eines Behälters zu messen, diese Messwerte dann weiterverarbeitet und mit der Kommunikationseinrichtung an eine zentrale Überwachungseinheit sendet.

Die restliche Zeit befindet sich die Steuereinheit im Schlafmodus, in dem sie beispielsweise sogar abgeschaltet sein kann, und in dem sie wenig Energie verbraucht.

Die Überwachungseinheit ist dahingehend optimiert, auf energiesparende Weise auf ein Aktivierungssignal oder auch auf ein vordefiniertes Ereignis zu warten, um die Steuereinheit nach dem Empfang des Aktivierungssignals oder dem Eintritt des vordefinierten Ereignisses in den Arbeitsmodus zu bringen.

Beispielsweise können die Steuereinheit und die Überwachungseinheit Prozessoren sein, die im Hinblick auf ihre Aufgaben für die Steuereinrichtung ausgewählt wurden. Die Steuereinheit kann eine leistungsfähige CPU sein, die im Hinblick auf ihre Fähigkeiten die Komponenten des Feldgeräts zu steuern, ausgewählt wurde. Dazu kann die Steuereinheit auch einen eigenen Speicher und eine Vielzahl von Schnittstellen zu den verschiedenen Komponenten der Steuereinrichtung aufweisen.

Demgegenüber kann die Überwachungseinheit ein Mikrocontroller, beispielsweise ein Low-Power-µC sein, der im Hinblick auf seinen Energieverbrauch ausgewählt ist, und der ausgeführt ist nur bestimmte Funktionen, wie etwa das Überführen der Steuereinheit in den Arbeitsmodus und das Warten auf das Aktivierungssignal, durchzuführen.

Viele Mikroprozessor- und Speicherchips weisen bereits vom Hersteller implementierte Stromsparmodi zum Senken des Energieverbrauchs auf. Dabei werden beispielsweise verschiedene Stromverbraucher in ihnen langsamer betrieben oder abgeschaltet. Leistungsfähige CPUs haben nur bedingt Möglichkeiten, um den Stromverbrauch zu senken oder haben im Stromsparmodus einen trotzdem relativ hohen Stromverbrauch. Kleine Mikrocontroller können im Standby-Zustand einen sehr geringen Strom aufnehmen. Hierfür werden besondere Mikrocontroller (zum Beispiel MSP 430 von Texas Instruments) angeboten. Diese sind aber mit weniger Speicher ausgestattet und somit nicht geeignet für Anwendungen mit hohem Rechnungsbedarf, wie etwa die Steuerung eines kompletten Feldgeräts.

Trotz der bereits vorimplementierten Stromsparmodi kann der Stromverbrauch eines Feldgeräts mit einer leistungsstarken CPU nicht auf ein Niveau gesenkt werden, so dass es beispielsweise mit einer Batterie betrieben werden kann und die Batterie nicht ständig ausgewechselt werden muss.

Durch die erfindungsgemäße Lösung kann der Stromverbrauch einer Steuereinrichtung für ein Feldgerät auf einen Bruchteil gesenkt werden und somit die Lebensdauer der Batterie deutlich erhöht werden. Trotzdem ist das Absetzen eines Messwertes nach einem vordefinierten Ereignis, wie beispielsweise ein definiertes Zeitraster oder bei einem sonstigen Ereignis, wie etwa einem niedrigen Batterieladezustand, möglich. Wird beispielsweise eine leistungsstarke CPU komplett abgeschaltet, kann der Strombedarf gegenüber bekannten Systemen deutlich verringert werden.

Gemäß einer Ausführungsform der Erfindung ist die Überwachungseinheit dazu ausgeführt, die Steuereinheit nach dem Empfang des Deaktivierungssignals in den Schlafmodus zu bringen. Damit kann eine komplette Abschaltung der Steuereinheit durch die Überwachungseinheit vorgenommen werden. Wenn die Überwachungseinheit die Steuereinheit komplett deaktiviert, kann die Stromaufnahme bzw. Energieaufnahme der Steuereinheit während des Schlafmodus auf 0 gesenkt werden.

Alternativ dazu ist es möglich, dass die Steuereinheit nach dem Senden des Deaktivierungssignals an die Überwachungseinheit sich selbstständig abschaltet.

Gemäß einer Ausführungsform der Erfindung umfasst die Steuereinrichtung eine Stromversorgung zur Versorgung der Steuereinheit und der Überwachungseinheit mit Strom, wobei die Überwachungseinheit dazu ausgeführt ist, die Steuereinheit dadurch in den Arbeitsmodus zu bringen, dass sie die Steuereinheit mit der Stromversorgung verbindet.

Damit kann erreicht werden, dass die Steuereinheit im Schlafmodus von der Stromversorgung getrennt ist und keinerlei Strom aufnehmen kann. Damit ist der Energieverbrauch der Steuereinheit gegenüber dem Energieverbrauch der Steuereinheit in einem Energiesparmodus noch weiter abgesenkt.

Gemäß einer Ausführungsform der Erfindung kann die Überwachungseinheit separat von der Steuereinheit mit Strom versorgbar sein. Dazu kann die Stromversorgung beispielsweise automatisch schaltbare Versorgungseinheiten für die einzelnen Komponenten der Steuereinrichtung, wie etwa die Steuereinheit, die Überwachungseinheit, die Messeinheit und die Kommunikationseinheit umfassen.

Gemäß einer Ausführungsform der Erfindung kann die Überwachungseinheit auch dazu ausgeführt sein, die Steuereinheit dadurch in den Schlafmodus zu bringen, dass sie die Steuereinheit von der Stromversorgung trennt.

Gemäß einer Ausführungsform der Erfindung kann die Stromversorgung einen Stromanschluss umfassen, wie beispielsweise eine Leitung, die mit einem Stromnetz verbunden ist.

Gemäß einer Ausführungsform der Erfindung kann die Stromversorgung einen Energiespeicher, wie etwa eine Batterie oder einen Akkumulator, umfassen.

Gemäß einer Ausführungsform der Erfindung umfasst die Steuereinrichtung weiter eine Energieüberwachung, wobei die Energieüberwachung dazu ausgeführt ist, das Aktivierungssignal an die Überwachungseinheit zu senden, wenn ein Ladezustand des Energiespeichers einen vordefinierten Wert überschreitet. Beispielsweise kann der Energiespeicher durch ein Solarmodul des Feldgeräts mit Energie geladen werden. Nur dann, wenn der Energiespeicher einen Ladezustand erreicht hat, in dem genügend Energie im Energiespeicher gespeichert ist, um die Steuereinrichtung zu aktivieren, einen Messwert zu ermitteln und diesen Messwert beispielsweise an einen Empfänger zu senden, aktiviert die Überwachungseinheit die Steuereinheit, so dass diese die zuvor genannten Funktionen ausführen lassen kann. Anschließend nimmt die Steuereinheit wieder den Schlafmodus ein und der Energiespeicher kann wieder geladen werden.

Gemäß einer Ausführungsform der Erfindung ist die Energieüberwachung dazu ausgeführt, das Aktivierungssignal an die Überwachungseinheit zu senden, wenn ein Entladezustand des Energiespeichers einen vordefinierten Wert unterschreitet. In diesem Fall kann die Steuereinheit beispielsweise eine Nachricht an eine zentrale Überwachungseinheit senden, dass der Energiespeicher, wie beispielsweise eine Batterie oder ein Akkumulator, ausgetauscht werden muss. Der vordefinierte Ladezustand kann aber auch so gewählt sein, dass zusätzlich oder alternativ noch ein letzter Messwert ermitteln werden kann, bevor nicht mehr genügend Energie zum Ermitteln des Messwerts und Senden des Messwerts an eine zentrale Überwachungseinrichtung vorhanden ist.

Gemäß einer Ausführungsform der Erfindung umfasst die Steuereinrichtung einen Zeitgeber, wobei der Zeitgeber dazu ausgeführt ist, zu einer vorgegebenen Zeit oder nach Ablauf einer vorgegebenen Zeit das Aktivierungssignal an die Überwachungseinheit zu senden. Beispielsweise könnte die Steuereinheit nach dem Ablauf von einer Stunde oder zu jeder vollen Stunde geweckt werden, um einen Messwert zu ermitteln und diesen weiterzusenden.

Gemäß einer Ausführungsform der Erfindung ist die Steuereinheit dazu ausgeführt, den Zeitgeber die vorgegebene Zeit mitzuteilen, bzw. dem Zeitgeber die vorgegebene Zeit einzuprogrammieren.

Die Steuereinheit kann dazu ausgeführt sein, den Zeitgeber zu starten. Beispielsweise startet die Steuereinheit den Zeitgeber vor dem Senden des Deaktivierungssignals. Anschließend wird die Steuereinheit zu der vorgegebenen Zeit oder nach Ablauf der vorgegebenen Zeit wieder durch die Überwachungseinheit aktiviert.

Gemäß einer Ausführungsform der Erfindung umfasst die Steuereinrichtung einen Schalter, wobei das Aktivierungssignal durch manuelles Auslösen des Schalters an die Überwachungseinheit gesendet wird. Dadurch kann die Steuereinrichtung auch dann aktiviert werden, wenn ein Wartungstechniker den Zustand der Steuereinrichtung bzw. des gesamten Feldgeräts untersuchen will.

Gemäß einer Ausführungsform der Erfindung ist die Überwachungseinheit dazu ausgeführt, weitere Komponenten des Feldgeräts nach dem Empfang des Deaktivierungssignals auszuschalten oder in einen Schlafzustand zu überführen. Die Energieaufnahme der Steuereinrichtung kann durch das Deaktivieren weiterer Komponenten, wie beispielsweise der Messeinheit oder der Kommunikationseinheit, weiter reduziert werden.

Gemäß einer Ausführungsform der Erfindung ist die Überwachungseinheit dazu ausgeführt, die weiteren Komponenten nach Empfang des Aktivierungssignals einzuschalten oder in einen Arbeitsmodus zu überführen.

Gemäß einer Ausführungsform der Erfindung kann auch die Steuereinrichtung dazu ausgeführt sein, weitere Komponenten des Feldgeräts vor dem Senden des Deaktivierungssignals auszuschalten oder in einem Schlafmodus zu überführen.

Gemäß einer Ausführungsform der Erfindung kann auch die Steuereinheit dazu ausgeführt sein, die weiteren Komponenten nach Aktivierung der Steuereinheit einzuschalten oder in einen Arbeitsmodus zu überführen.

Beispielsweise kann das Ein- bzw. Ausschalten der weiteren Komponenten durch Schalten der automatisch schaltbaren Versorgungseinheiten der Energieversorgung erfolgen. Somit kann auch die Stromaufnahme der weiteren Komponenten während des Schlafmodus der Steuereinheit auf 0 gesenkt werden.

Gemäß einer Ausführungsform der Erfindung ist die Überwachungseinheit dazu ausgeführt, nach dem Ausschalten der Steuereinheit in einen Stromsparmodus zu wechseln und nach dem Empfang des Aktivierungssignals den Stromsparmodus zu beenden. Damit können beispielsweise die vom Hersteller implementierten Stromsparmodi verwendet werden, um die Energieaufnahme der Steuereinrichtung weiter abzusenken.

Die Erfindung betrifft auch ein Feldgerät mit einer erfindungsgemäßen Steuereinrichtung. Ein derartiges Feldgerät kann beispielsweise ein Füllstandsmesssystem oder ein Füllstandsradar sein. Das Feldgerät kann einen Sensor aufweisen, der beispielsweise zur Füllstands-, Grenzstands- oder DruckMessung in einem Behälter oder zur Durchflussmessung in einer Leitung ausgeführt ist.

Ein derartiges Feldgerät ist in der Lage, mit einem sehr geringen Strombedarf, gegebenenfalls batteriebetrieben oder akkubetrieben, zu arbeiten. Dabei kann eine leistungsfähige CPU von einer Stromspar- oder Überwachungseinheit gesteuert werden, um bei einem aufgetretenen Ereignis von dieser eingeschaltet zu werden. Die Überwachungseinheit kann ebenso Kommunikationsschnittstellen (GSM, Ethernet oder ähnliches) und eine Messeinheit oder den Sensor ausschalten, um einen sehr niedrigen Standby-Strom des Feldgeräts zu erreichen.

Die Erfindung betrifft auch eine Verwendung einer separaten Überwachungseinheit zur Deaktivierung einer Steuereinheit eines Feldgeräts.

Die Erfindung betrifft auch ein Verfahren zur Steuerung eines Feldgeräts. Gemäß einer Ausführungsform der Erfindung umfasst das Verfahren die Schritte: Einnehmen eines Schlafmodus durch eine Steuereinheit; Senden eines Deaktivierungssignals von der Steuereinheit an eine Überwachungseinheit vor dem Einnehmen des Schlafmodus; Empfangen eines Aktivierungssignals durch die Überwachungseinheit; Überführen der Steuereinheit in einen Arbeitsmodus durch die Überwachungseinheit nach dem Empfang des Aktivierungssignals.

Gemäß einer Ausführungsform der Erfindung umfasst das Verfahren weiter den Schritt: Überführen oder Umschalten der Steuereinheit in den Schlafmodus durch die Überwachungseinheit nach dem Empfang des Deaktivierungssignals.

Gemäß einer Ausführungsform der Erfindung umfasst das Verfahren weiter den Schritt: Senden des Aktivierungssignals von einem Zeitgeber an die Überwachungseinheit zu einer vorgegebenen Zeit oder nach Ablauf einer vorgegebenen Zeit.

Die Erfindung betrifft auch ein Programmelement für eine Steuereinrichtung eines Feldgeräts, das, wenn es von der Steuereinrichtung ausgeführt wird, das erfindungsgemäße Verfahren durchführt.

Die Erfindung betrifft auch ein computerlesbares Medium, auf dem das Programmelement gespeichert ist.

Ein computerlesbares Medium kann eine Diskette, eine Festplatte, eine CD oder DVD, ein USB-(Universal Serial Bus)-Speichergerät, ein RAM (Random Access Memory), ein ROM (Read Only Memory) und ein EPROM (Erasable Programmable Read Only Memory) sein. Ein computerlesbares Medium kann auch ein Datenkommunikationsnetzwerk, wie etwa das Internet sein, das einen Download eines Programmcodes ermöglicht.

Im Folgenden werden Ausführungsbeispiele der Erfindung mit Bezug auf die beiliegenden Figuren detailliert beschrieben.

### Kurze Beschreibung der Figuren

**Fig. 1** zeigt schematisch ein Feldgerät gemäß einem Ausführungsbeispiel der Erfindung.
**Fig. 2** zeigt ein Flussdiagramm, das ein Steuerungsverfahren für ein Feldgerät gemäß einem Ausführungsbeispiel der Erfindung darstellt.
**Fig. 3** zeigt schematisch den Aufbau einer Steuereinheit gemäß einem Ausführungsbeispiel der Erfindung.
**Fig. 4** zeigt schematisch den Aufbau einer Steuereinheit gemäß einem weiteren Ausführungsbeispiel der Erfindung.
**Fig. 5** zeigt schematisch den Aufbau einer Steuereinrichtung gemäß einem weiteren Ausführungsbeispiel der Erfindung.

### Detaillierte Beschreibung der Ausführungsbeispiele

Die Darstellungen der Figuren sind schematisch und nicht maßstäblich. In der folgenden Figurenbeschreibung werden für die gleichen oder ähnlichen Elemente die gleichen Bezugsziffern verwendet.

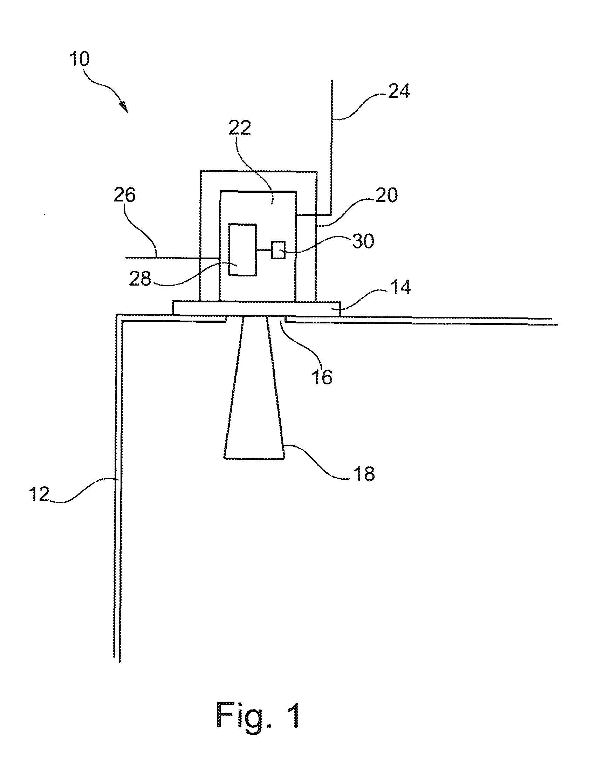

Die Fig. 1 zeigt ein Feldgerät 10, das an einem Behälter 12 befestigt ist und beispielsweise als Füllstandsradar ausgeführt ist. Das Feldgerät 10 ist beispielsweise mittels eine Montageplatte 14 bei einer Öffnung 16 des Behälters angebracht, durch die ein Sensor 18 in das Innere des Behälters 12 ragt. Bezüglich der Montageplatte 14 dem Sensor 18 entgegengesetzt befindet sich ein Gehäuse 20, in dessen Inneren eine Steuereinrichtung 22 für das Feldgerät 10 angeordnet ist. Die Steuereinrichtung 22 im Außenbereich des Behälters 12 kann mit einer Antenne 24 verbunden sein, um über Funk Daten mit einem Empfänger auszutauschen. Weiter kann die Steuereinrichtung 22 mit einer Leitung 26 zur Datenkommunikation und/oder zur Energieversorgung verbunden sein.

Die Steuereinrichtung 22 umfasst eine Steuereinheit 28 und eine davon separate Überwachungseinheit 30.

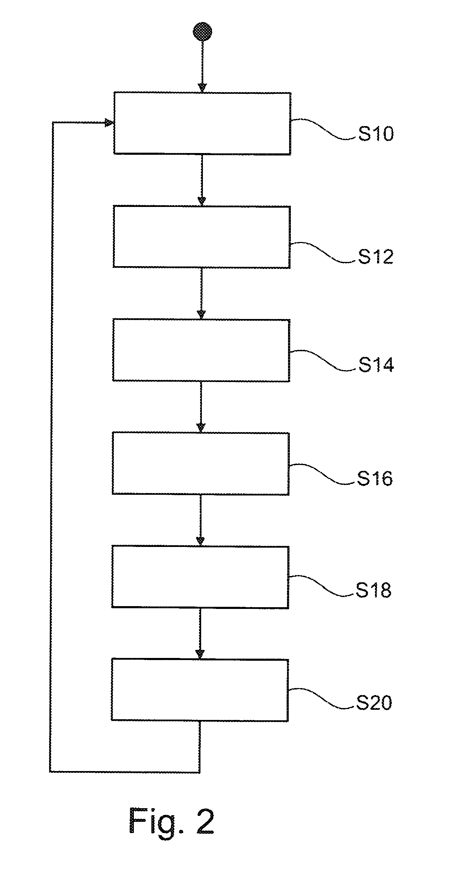

Die Fig. 2 zeigt ein Flussdiagramm, das ein Verfahren zur Steuerung des Feldgeräts 10 aus der Fig. 1 darstellt.

Während des Schritts S10 befindet sich das in der Fig. 1 gezeigte Füllstandsradar 10 in einem Energiesparmodus, in dem die Energieaufnahme der Steuereinrichtung 22 stark reduziert ist. Während des Energiesparmodus befindet sich die Steuereinheit 28 in einem Schlafmodus und ist abgeschaltet. Die Überwachungseinheit 30 wartet auf ein Aktivierungssignal von einem Zeitgeber.

Im Schritt S12 empfängt die Überwachungseinheit 30 das Aktivierungssignal des Zeitgebers.

Im Schritt S14 wird die Steuereinheit 28 durch die separate Überwachungseinheit 30 geweckt, in dem sie mit der Energieversorgung 26 des Feldgeräts 10 verbunden wird.

Im Schritt S16 führt die Steuereinheit 28 verschiedene Steuerungsfunktionen für das Feldgerät 10 durch. Sie weist beispielsweise eine Messeinheit des Feldgeräts 10 an, über die Hornantenne 18 ein Radarsignal in das Innere des Behälters 12 zu senden und das reflektierte Signal zu erfassen. Die Steuereinheit 28 verarbeitet die im Sensor 18 entstehenden Signale und sendet den ermittelten Messwert über Funk und die Antenne 24 an einen zentralen Rechner.

Im Schritt S18 programmiert die Steuereinheit 28 den Zeitgeber, zu welchem Zeitpunkt der nächste Arbeitsmodus beginnen soll und sendet ein Deaktivierungssignal an die Überwachungseinheit 30.

Im Schritt S20 versetzt die Überwachungseinheit 30 die Steuereinheit 28 wieder in den Schlafmodus, in dem sie sie von der Energieversorgung 26 der Steuereinrichtung 22 trennt. Das Verfahren wird im Schritt S10 fortgesetzt.

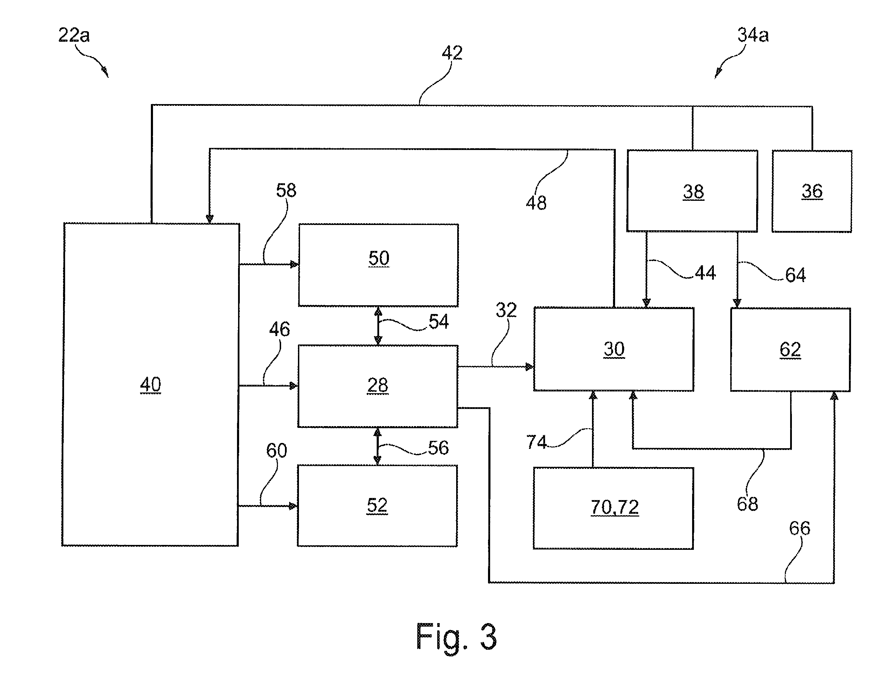

Die Fig. 3 zeigt schematisch den Aufbau einer Steuereinrichtung 22a, die wie die Steuereinrichtung 22 in dem Feldgerät 10 eingebaut sein kann. Die Steuereinrichtung 22a umfasst eine Steuereinheit 28, die eine CPU mit Speicher und Schnittstellen umfasst. Die Steuereinheit 28 kann über eine Signalleitung 32 ein Deaktivierungssignal an eine Überwachungseinheit 30, hier einen Low-Power-Mikrocontroller 30 senden.

Die Steuereinrichtung 22a umfasst eine Stromversorgung 34a, die einen Energiespeicher 36 in der Form einer Batterie oder eines Akkumulators sowie zwei

Versorgungseinheiten 38 und 40 umfasst, die über eine gemeinsame Stromleitung 42 oder einen DC-Bus 42 mit dem Energiespeicher 36 verbunden sind. Die Überwachungseinheit 30 wird über die Stromleitung 44 von der Versorgungseinheit 38 mit Strom versorgt. Die Steuereinheit 28 wird von der Versorgungseinheit 40 über die Stromleitung 46 mit Strom versorgt.

Die Versorgungseinheit 40 ist automatisch schaltbar. In einem ausgestalteten oder deaktivierten Zustand ist die Stromversorgung von dem DC-Bus 42 zu der Stromleitung 46 unterbrochen. In einem eingeschalteten oder aktivierten Zustand der Versorgungseinheit 40 kann Strom vom DC-Bus 42 über die Stromleitung 46 zur Steuereinheit 28 übertragen werden. Über die Signalleitung 48 kann die Überwachungseinheit 30 ein Aus- bzw. Einschaltsignal an die Versorgungseinheit 40 senden, worauf diese jeweils in den ein- bzw. ausgeschalteten Zustand schaltet bzw. umschaltet.

Die Steuereinrichtung 22a weist eine Messeinheit 50 und eine Kommunikationsschnittstelle 52 auf, die über die Signalleitungen 54 und 56 mit der Steuereinheit 28 in bidirektionaler Datenkommunikation stehen. Wie die Steuereinheit 28 sind die Messeinheit 50 und die Kommunikationseinheit 52 über Stromleitungen 58 bzw. 60 mit der Versorgungseinheit 40 verbunden. Genauso wie die Stromleitung 46 sind die Stromleitungen 58 und 60 im ausgeschalteten Zustand der Versorgungseinheit 40 von DC-Bus 42 getrennt. Im eingeschalteten Zustand der Versorgungseinheit 40 können die Messeinheit 50 und die Kommunikationseinheit 52 über die Leitungen 58 und 60 mit Strom versorgt werden. Durch Senden des Ein- bzw. Ausschaltsignals über die Leitung 48 kann die Überwachungseinheit 30 somit die Steuereinheit 28, die Messeinheit 50 und die Kommunikationseinheit 52 gleichzeitig ein- und ausschalten bzw. von der Stromversorgung trennen oder sie mit dieser verbinden.

Die Steuereinrichtung 22a weist einen Zeitgeber in der Form einer Echtzeituhr 62 auf, die über die Stromleitung 64 von der Versorgungseinheit 38 mit Strom versorgbar ist. Über eine Signalleitung 66 kann die Steuereinrichtung 28 die Echtzeituhr 62 programmieren und dabei einen Alarm oder eine vorgegebene Zeit in der Echtzeituhr 62 setzen. Über eine Signalleitung 68 kann die Echtzeituhr 62 einen Echtzeituhr-Alarm bzw. ein Aktivierungssignal an die Überwachungseinheit 30 senden.

Die Steuereinrichtung 22a arbeitet wie folgt. Nachdem eine Nachricht über die Kommunikationseinheit 52 abgesetzt wurde, programmiert die Steuereinheit 28 in der Echtzeituhr 62 eine Alarmzeit für den nächsten geplanten Nachrichtenversand. In der Nachricht kann beispielsweise ein soeben gemessener Messwert kodiert sein. Danach signalisiert die Steuereinheit 28 über die Signalleitung 32 mittels eines Deaktivierungssignales der Überwachungseinheit 30, dass der Stromsparmodus bzw. Schlafmodus aktiviert werden kann. Die Überwachungseinheit 30 schaltet mittels eines Ausschaltsignals über die Signalleitung 48 die Versorgungseinheit 40 der Kommunikationseinheit 52, der Messeinheit 50 und der Steuereinheit 28 und optional weitere Komponenten, wie beispielsweise einem externen Flash und RAM, ab. Danach sind nur noch die Echtzeituhr 62, die Überwachungseinheit 30 und deren Versorgungseinheit 38 aktiv. Jetzt wechselt die Überwachungseinheit 30 selbst in einen Stromsparmodus und wartet auf das Alarm- oder Aktivierungssignal der Echtzeituhr 62 über die Signalleitung 68. Dieses Alarm- oder Aktivierungssignal weckt zunächst die Überwachungseinheit 30 auf, worauf diese dann über die Signalleitung 48 ein Einschaltsignal an die Versorgungseinheit 40 sendet und somit die Versorgungseinheit 40 der Steuereinheit 28 sowie der Messeinheit 50 und der Kommunikationseinheit 52 und optional weitere Komponenten wie etwa externes Flash und RAM, einschaltet bzw. aktiviert. Die Haupt-CPU 28 bzw. Steuereinheit 28 kann jetzt erneut eine Nachricht versenden, um danach wieder in den Schlafmodus versetzt zu werden.

Die Steuereinrichtung 22a kann weiter einen Taster bzw. Tastschalter 70 und/oder einen Komparator 72 umfassen. Der Tastschalter 70 und der Komparator 72 können über eine Signalleitung 74 ein Aktivierungssignal an die Überwachungseinheit 30 senden.

Um das Aktivieren der Steuereinrichtung 22a auch neben dem Eintreten von der Echtzeituhr 62 ausgelösten Aktivierungssignals zu ermöglichen, kann die Überwachungseinheit 30 nicht nur durch einen Alarm der Echtzeituhr 62, sondern auch durch weitere Signale aktiviert werden. Das Überwachungssignal wird dabei von dem Tastschalter 70 an die Überwachungseinheit 30 gesendet, wenn der Tastschalter 70 manuell aktiviert wird, was dann zu einem manuellen Auslösen des Sendens der Nachricht von der Kommunikationseinheit 52 führt oder dadurch, dass der Komparator eine Mindestladespannung im Akkumulator 36 misst, was zum Auslösen einer Nachricht bei Erreichen dieser Mindestladespannung führt.

Neben dem Versand einer Nachricht als durchzuführende Aktivität der Steuereinheit 28 können beliebige Tätigkeiten des Feldgeräts 10, die eine leistungsfähige CPU 28 benötigen, durchgeführt werden. Ansonsten befindet sich die leistungsfähige CPU 28 im Schlafmodus, um den Gesamtenergiebedarf der Steuereinrichtung 22a zu optimieren.

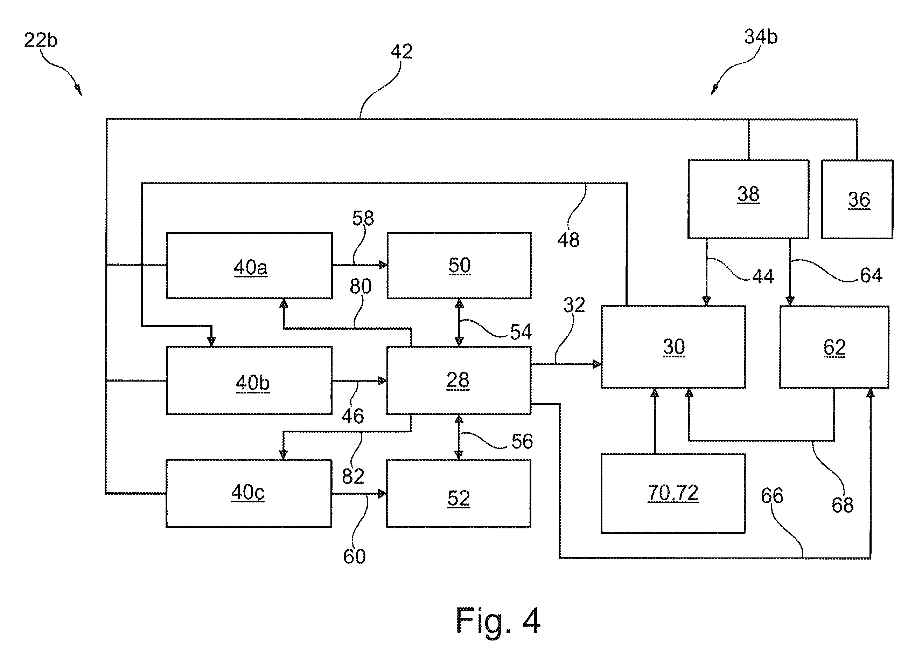

Die Fig. 4 zeigt ein alternatives Ausführungsbeispiel einer Steuereinrichtung 22b schematisch im Aufbau, die auch analog der Steuereinrichtung 22a in das Feldgerät 10 eingebaut sein kann. Die in der Fig. 4 gezeigten Elemente mit den gleichen Bezugszeichen wie die in der Fig. 3 gezeigten Elemente können die in Bezug auf die Fig. 3 beschriebenen Eigenschaften und Funktionen aufweisen.

Im Gegensatz zu der Steuereinrichtung 22a umfasst die Steuereinrichtung 22b anstatt der Versorgungseinheit 40 drei getrennte Stromversorgungseinheiten 40a, 40b und 40c, die mit dem DC-Bus 42 verbunden sind. Genauso wie die Versorgungseinheit 40 sind die Versorgungseinheiten 40a, 40b und 40c automatisch schaltbar. Die Versorgungseinheit 40b kann dabei analog zur Versorgungseinheit 40 aus der Fig. 3 ein Ein- bzw. Ausschaltsignal über die Leitung 48 von der Überwachungseinheit 30 empfangen.

Das Ein- und Ausschalten der Versorgungseinheiten 40a und 40c übernimmt bei der Steuereinrichtung 22b jedoch die Steuereinheit 28, indem sie über die Signalleitungen 80 und 82 Ein- oder Ausschaltsignale an die Versorgungseinheit 40a bzw. 40c sendet. Die Steuereinheit 28 bestimmt zunächst, welche externen Komponenten, wie beispielsweise die Messeinheit 50 oder die Kommunikationseinheit 52, von der Stromversorgung getrennt werden, bevor die Überwachungseinheit 30 die Steuereinheit 28 und andere Komponenten, wie beispielsweise ein externes Flash und ein RAM, von der Stromversorgung 34b trennt.

Die Stromversorgung 34b der Steuereinrichtung 22b umfasst dabei den Energiespeicher 36, die Versorgungseinheit 38 sowie die Versorgungseinheiten 40a, 40b und 40c.

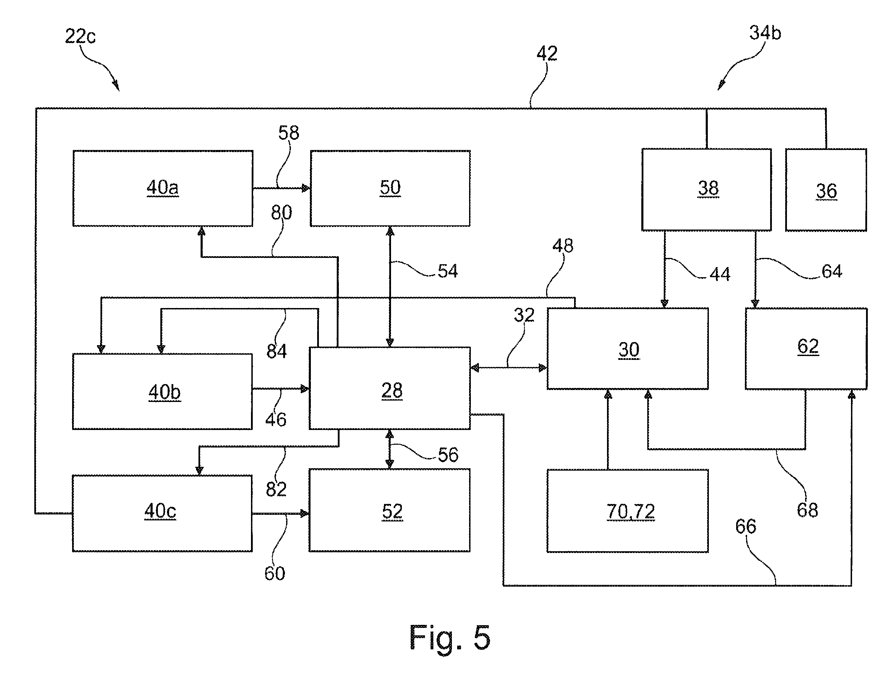

Die Fig. 5 zeigt ein weiteres Ausführungsbeispiel einer Steuereinrichtung 22c, die analog der Steuereinrichtung 22a in das Feldgerät 10 eingebaut werden kann. Die in der Fig. 5 gezeigten Elemente mit den gleichen Bezugszeichen wie die in der Fig. 3 oder Fig. 4 gezeigten Elemente können die in Bezug auf die Fig. 3 oder die Fig. 4 beschriebenen Eigenschaften und Funktionen aufweisen.

Bei der in der Fig. 5 gezeigten Steuereinrichtung 22c kann eine bidirektionale Kommunikation zwischen der Steuereinrichtung 28 und der Überwachungseinheit 30 über die Signalleitung 32 stattfinden.

Dies kann einerseits dazu genutzt werden, um den Schlafmodus der Steuereinheit 28 der Überwachungseinheit 30 mitzuteilen. Die Steuereinheit 28 kann sich dann selbst ausschalten, indem sie ein Ausschaltsignal über die Signalleitung 84 an die Versorgungseinheit 40b übermittelt. Bei einem Ereignis, das durch die Echtzeituhr 62 oder weiterer Komponenten 70, 72 der Steuereinrichtung 22c ausgelöst werden kann, übermittelt die Überwachungseinheit 30 ein Einschaltsignal über die Signalleitung 48 an die Versorgungseinheit 40b, so dass die Überwachungseinheit 30 die Steuereinheit 28 wieder einschaltet.

Anderseits kann die bidirektionale Kommunikation dazu genutzt werden, um in der Überwachungseinheit 30 generierte Daten an die Steuereinheit 28 zu übermitteln, beispielsweise dann wenn die Überwachungseinheit 30 zusätzliche Messaufgaben oder Erfassungen durchführen kann. Die Überwachungseinheit 30 kann gegebenenfalls selbst Ereignisse generieren oder auslösen. Der Zustand der Steuereinheit 28 bzw. der Zustand des gesamten Systems 22c kann in der Überwachungseinheit 30 gespeichert werden. Die Überwachungseinheit 30 kann auch von der Steuereinheit 28 parametriert oder kalibriert werden.

Die Steuereinheit 28 und die Überwachungseinheit 30 können EPROMs enthalten, auf denen Programme gespeichert sind, mit denen die in Bezug auf die Figuren beschriebenen Verfahren durchgeführt werden, in dem die Programme von der Steuereinheit 28 und der Überwachungseinheit 30 ausgeführt werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Steuereinrichtung (22) für ein Feldgerät (10), umfassend:
eine Steuereinheit (28) zur Steuerung des Feldgeräts, und
eine separate Überwachungseinheit (30),
wobei die Steuereinheit (28) zum wahlweisen Einnehmen eines Arbeitsmodus und eines Schlafmodus ausgeführt ist;
wobei die Steuereinheit (28) dazu ausgeführt ist, vor dem Einnehmen des Schlafmodus ein Deaktivierungssignal an die Überwachungseinheit (30) zu senden;
wobei die Überwachungseinheit (30) dazu ausgeführt ist, die Steuereinheit (28) nach dem Empfang eines Aktivierungssignals in den Arbeitsmodus zu bringen, **dadurch gekennzeichnet, dass** die Überwachungseinheit (30) dazu eingerichtet ist, die Steuereinheit (28) im Schlafmodus von einer Stromversorgung (36, 38, 40) zu trennen.

2. Steuereinrichtung (22) nach Anspruch 1,
wobei die Überwachungseinheit (30) dazu ausgeführt ist, die Steuereinheit (28) nach dem Empfang des Deaktivierungssignals in den Schlafmodus zu bringen.

3. Steuereinrichtung (22) nach Anspruch 1 oder 2, weiter umfassend:
eine Stromversorgung (36, 38, 40) zur Versorgung der Steuereinheit (28) und der Überwachungseinheit (30) mit Strom,
wobei die Überwachungseinheit (30) dazu ausgeführt ist, die Steuereinheit (28) dadurch in den Arbeitsmodus zu bringen, dass sie die Steuereinheit mit der Stromversorgung (36, 38, 40) verbindet.

4. Steuereinrichtung nach einem der vorhergehenden Ansprüche,
wobei die Stromversorgung einen Energiespeicher (36) umfasst.

5. Steuereinrichtung nach Anspruch 4, weiter umfassend:
eine Energieüberwachung (72),
wobei die Energieüberwachung (72) dazu ausgeführt ist, das Aktivierungssignal an die Überwachungseinheit (30) zu senden, wenn ein Ladezustand des Energiespeichers (36) einen vordefinierten Wert überschreitet,
wobei die Energieüberwachung (72) dazu ausgeführt ist, das Aktivierungssignal an die Überwachungseinheit (30) zu senden, wenn ein Entladezustand des Energiespeichers (36) einen vordefinierten Wert unterschreitet.

6. Steuereinrichtung (22) nach einem der vorhergehenden Ansprüche, weiter umfassend:
einen Zeitgeber (62),
wobei der Zeitgeber (62) dazu ausgeführt ist, zu einer vorgegeben Zeit oder nach Ablauf einer vorgegeben Zeit das Aktivierungssignal an die Überwachungseinheit (30) zu senden,
wobei die Steuereinheit (28) dazu ausgeführt ist, dem Zeitgeber (62) die vorgegebene Zeit mitzuteilen.

7. Steuereinrichtung (22) nach einem der vorhergehenden Ansprüche, weiter umfassend:
einen Schalter (70),
wobei das Aktivierungssignal durch manuelles Auslösen des Schalters (70) an die Überwachungseinheit (30) gesendet wird.

8. Steuereinrichtung (22) nach einem der vorhergehenden Ansprüche,
wobei die Überwachungseinheit (30) dazu ausgeführt ist, weitere Komponenten (50, 52) des Feldgeräts nach dem Empfang des Deaktivierungssignals auszuschalten,
wobei die Überwachungseinheit (30) dazu ausgeführt ist, die weiteren Komponenten (50, 52) nach dem Empfang des Aktivierungssignals einzuschalten.

9. Steuereinrichtung (22) nach einem der vorhergehenden Ansprüche,
wobei die Steuereinheit (28) dazu ausgeführt ist, weitere Komponenten (50, 52) des Feldgeräts vor dem Senden des Deaktivierungssignals auszuschalten,
wobei die Steuereinheit (28) dazu ausgeführt ist, die weiteren Komponenten (50, 52) nach Aktivierung der Steuereinheit (28) einzuschalten.

10. Feldgerät (10) mit einer Steuereinrichtung (22) nach einem der Ansprüche 1 bis 9.

11. Verfahren zur Steuerung eines Feldgeräts (10), umfassend die Schritte:
Einnehmen eines Schlafmodus durch eine Steuereinheit (28);
Senden eines Deaktivierungssignal von der Steuereinheit (28) an eine separate Überwachungseinheit (30) vor dem Einnehmen des Schlafmodus;
Trennen der Steuereinheit (28) im Schlafmodus von einer Stromversorgung (36, 38, 40) durch die Überwachungseinheit (30);
Empfangen eines Aktivierungssignals durch die Überwachungseinheit (30);
Überführen der Steuereinheit (28) in einen Arbeitsmodus durch die Überwachungseinheit (30) nach dem Empfang des Aktivierungssignals.

12. Verfahren nach Anspruch 12, weiter umfassend den Schritt:
Überführen der Steuereinheit (28) in den Schlafmodus durch die Überwachungseinheit (30) nach dem Empfang des Deaktivierungssignals.

13. Programmelement für eine Steuereinrichtung (22) für ein Feldgerät, das, wenn es von der Steuereinrichtung (22) ausgeführt wird, ein Verfahren nach einem der Ansprüche 12 oder 13 durchführt.

14. Computerlesbares Medium, auf dem ein Programmelement nach Anspruch 14 gespeichert ist.

## Claims

1. A control device (22) for a field device (10), comprising:
a control unit (28) for controlling the field device,
and
a separate monitoring unit (30),
wherein the control unit (28) is designed for optionally assuming an operational mode and a sleep mode;
wherein the control unit (28) is designed prior to assuming the sleep mode for transmitting a deactivation signal to the monitoring unit (30);
wherein the monitoring unit (30) is designed for bringing the control unit (28) to the operating mode after receipt of an activation signal, **characterized in that** the monitoring unit (30) is equipped for separating the control unit (28) in the sleep mode from a power supply (36, 38, 40).

2. The control device (22) according to claim 1,
wherein the monitoring unit (30) is designed for bringing the control unit (28) to the sleep mode after receipt of the deactivation signal.

3. The control device (22) according to claim 1 or 2, further comprising:
a power supply (36, 38, 40) for supplying the control unit (28) and the monitoring unit (30) with current,
wherein the monitoring unit (30) is designed for bringing the control unit (28) to the operational mode in that it connects the control unit to the power supply (36, 38, 40).

4. The control device according to any one of the preceding claims,
wherein the power supply comprises an energy storage device (36).

5. The control device according to claim 4, further comprising:
an energy monitoring device (72),
wherein the energy monitoring device (72) is designed for transmitting the activation signal to the monitoring unit (30) when a charge state of the energy storage device (36) exceeds a predefined value,
wherein the energy monitoring device (72) is designed for transmitting the activation signal to the monitoring unit (30) when a discharge state of the energy storage device (36) falls below a predefined value.

6. The control device (22) according to any one of the preceding claims, further comprising:
a timer (62),
wherein the timer (62) is designed for sending the activation signal to the monitoring unit (30) at a predetermined time or after a predetermined period of time has passed,
wherein the control unit (28) is designed for informing the timer (62) of the predetermined time.

7. The control device (22) according to any one of the preceding claims, further comprising:
a switch (70),
wherein the activation signal is transmitted to the monitoring unit (30) by manual triggering of the switch (70).

8. The control device (22) according to any one of the preceding claims,
wherein the monitoring unit (30) is designed for switching off further components (50, 52) of the field device after receipt of the deactivation signal, wherein the monitoring unit (30) is designed to switch the further components (50, 52) on after receipt of the activation signal.

9. The control device (22) according to any one of the preceding claims,
wherein the control unit (28) is designed to switch further components (50, 52) of the field device off prior to transmission of the deactivation signal, wherein the control unit (28) is designed for switching the further components (50, 52) on after activation of the control unit (28).

10. A field device (10) comprising a control device (22) according to any one of claims 1 to 9.

11. A method for controlling a field device (10), comprising the steps of:
assuming a sleep mode by a control unit (28);
transmitting a deactivation signal from the control unit (28) to a separate monitoring unit (30) prior to assuming the sleep mode;
separating the control unit (28) in the sleep mode from a current supply (36, 38, 40) by the monitoring unit (30);
receiving an activation signal by the monitoring unit (30);
transferring the control unit (28) to an operating mode by the monitoring unit (30) after receipt of the activation signal.

12. The method according to claim 12, further comprising the step of:
transferring the control unit (28) to the sleep mode by the monitoring unit (30) after receipt of the deactivation signal.

13. A program element for a control device (22) for a field device, which when executed by the control device (22) carries out a method according to one of claims 12 or 13.

14. A computer-readable medium on which a program element according to claim 14 is stored.

## Revendications

1. Dispositif de commande (22) pour un appareil de champ (10), comprenant :
une unité de commande (28) pour la commande de l'appareil de champ, et
une unité de contrôle (30) séparée,
l'unité de commande (28) étant réalisée pour l'occupation sélective d'un mode de travail et d'un mode veille ;
l'unité de commande (28) étant réalisée pour envoyer à l'unité de contrôle (30) un signal de désactivation,
avant l'occupation du mode veille ;
l'unité de contrôle (30) étant réalisée pour amener dans le mode de travail l'unité de commande (28), après la
réception d'un signal d'activation,
**caractérisé en ce que**
l'unité de contrôle (30) est conçue pour séparer l'unité de commande (28), dans le mode veille, d'une alimentation en énergie électrique (36, 38, 40).

2. Dispositif de commande (22) selon la revendication 1, l'unité de contrôle (30) étant réalisée pour amener l'unité de commande (28) dans le mode veille, après la réception du signal de désactivation.

3. Dispositif de commande (22) selon l'une des revendications 1 et 2, comprenant en outre :
une alimentation en énergie électrique (36, 38, 40) pour alimenter en courant l'unité de commande (28) et l'unité de contrôle (30),
l'unité de contrôle (30) étant réalisée pour amener l'unité de commande (28) dans le mode de travail, du fait qu'elle relie l'unité de commande à l'alimentation en énergie électrique (36, 38, 40).

4. Dispositif de commande selon l'une des revendications précédentes,
l'alimentation en énergie électrique comprenant un accumulateur d'énergie (36).

5. Dispositif de commande selon la revendication 4, comprenant en outre :
un contrôle d'énergie (72),
le contrôle d'énergie (72) étant réalisé pour envoyer à l'unité de contrôle (30) le signal d'activation,
lorsqu'un état de charge de l'accumulateur d'énergie (36) dépasse par le haut une valeur prédéfinie,
le contrôle d'énergie (72) étant réalisé pour envoyer à l'unité de contrôle (30) le signal d'activation,
lorsqu'un état de décharge de l'accumulateur d'énergie (36) dépasse par le bas une valeur prédéfinie.

6. Dispositif de commande (22) selon l'une des revendications précédentes, comprenant en outre :
un rythmeur (62),
le rythmeur (62) étant réalisé pour envoyer le signal d'activation à l'unité de contrôle (30), à un temps prédéfini ou après l'écoulement d'un temps prédéfini,
l'unité de commande (28) étant réalisée pour communiquer le temps prédéfini au rythmeur (62).

7. Dispositif de commande (22) selon l'une des revendications précédentes, comprenant en outre :
un interrupteur (70),
le signal d'activation étant envoyé à l'unité de contrôle (30) par déclenchement manuel de l'interrupteur (70).

8. Dispositif de commande (22) selon l'une des revendications précédentes,
l'unité de contrôle (30) étant réalisée pour déconnecter d'autres composants (50, 52) de l'appareil de champ après la réception du signal de désactivation,
l'unité de contrôle (30) étant réalisée pour connecter les autres composants (50, 52) après la réception du signal d'activation.

9. Dispositif de commande (22) selon l'une des revendications précédentes,
l'unité de commande (28) étant réalisée pour déconnecter d'autres composants (50, 52) de l'appareil de champ avant l'émission du signal de désactivation,
l'unité de commande (28) étant réalisée pour connecter les autres composants (50, 52) après l'activation de l'unité de commande (28).

10. Appareil de champ (10) avec un dispositif de commande (22) selon l'une des revendications 1 à 9.

11. Procédé de commande d'un appareil de champ (10), comprenant les étapes :
occupation d'un mode veille par une unité de commande (28) ;
émission d'un signal de désactivation par l'unité de commande (28) à une unité de contrôle (30) séparée, avant l'occupation du mode veille ;
séparation par l'unité de contrôle (30) de l'unité de commande (28), dans le mode veille, d'une alimentation en énergie électrique (36, 38 , 40) ;
réception d'un signal d'activation par l'unité de contrôle (30) ;
transfert de l'unité de commande (28), par l'unité de contrôle (30), dans un mode de travail après la réception du signal d'activation.

12. Procédé selon la revendication 12, comprenant en outre l'étape :
transfert de l'unité de commande (28), par l'unité de contrôle (30), dans le mode veille après la réception du signal de désactivation.

13. Elément de programme pour un dispositif de commande (22) destiné à un appareil de champ qui, lorsqu'il est réalisé par le dispositif de commande (22), met en oeuvre un procédé selon l'une des revendications 12 et 13.

14. Support lisible par ordinateur, sur lequel est mémorisé un élément de programme selon la revendication 14.
